# EUROPEAN PATENT APPLICATION

(11) **EP 4 790 562 A1**
(43) Date of publication of application: **12.08.2026**
(21) Application number: 26153033.1
(22) Date of filing: 20.01.2026
(51) Int. Cl.: G06F 13/28

(54) **BYPASSING A CONTROL PATH TO A REQUEST SIGNAL OUTPUT OF A FIRST IN FIRST OUT (FIFO) BUFFER FOR DATA TRANSFER ASSOCIATED WITH A DIRECT MEMORY ACCESS (DMA) OPERATION**

(30) Priority: 07.02.2025 IN 202541010580
(71) Applicant: NXP USA, Inc, Austin, TX 78735 (US)
(72) Inventor: Dumitru, Nicolae, 5656 AG Eindhoven (NL); Kamalapurkar, Shreedhar Madan Rao, 5656 AG Eindhoven (NL)
(74) Representative: Schmütz, Christian Klaus Johannes

(57) **Abstract**

A data transfer system outputs a counter value indicating a node of a linked list corresponding to a first-in-first out (FIFO) buffer. A determination is made whether the sequence descriptor of the node in the linked list indicates to bypass a control path from an output of the FIFO buffer. Based on the determination that the control path is bypassed, outputting a request signal originating from sequence control logic of a sequence control system. Based on the determination that the control path is not bypassed outputting a request signal from a request output of the FIFO buffer. The data transfer is then performed by a direct memory access (DMA) channel.

## Description

### FIELD OF USE

The present disclosure relates generally to data transfers, and more particularly, to a system, method and apparatus for bypassing a control path to a request signal output of a first-in-first-out (FIFO) buffer for data transfer associated with a direct memory access (DMA) operation.

### BACKGROUND

In systems such as infotainment systems in an automobile, data peripherals transmit and receive data signals such blocks of audio data and video data. Further, a direct memory access (DMA) operation is used to enable data transfer of data from first in first out (FIFO) buffers coupled to the data peripherals to a data processing system of the infotainment systems and vice versa. To facilitate this transfer, a linked list is typically defined where each node in the linked list defines a DMA operation for a particular FIFO buffer. The data stored in the different FIFO buffers identified in the nodes of the linked list are time aligned where the data is clocked in or out of the FIFO buffers at a same rate. A DMA channel then executes the data transfers of the FIFOs in a time staggered manner.

In some situations, a data transfer of a FIFO buffer identified in one node of the linked list might not be able to be performed due to timing violations such as jitter, timing deviations, timing drift or due to depletion of data in the FIFO buffer. Until the timing violation or depletion is resolved, the data transfer of the FIFO buffer and data transfers associated with FIFO buffers indicated by subsequent nodes of the linked list are blocked. The blocking results in non-responsiveness, malfunction, or inconsistent system behavior of the infotainment system or systems downstream to the infotainment system that rely on the DMA operations indicated by the subsequent nodes being performed.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is an example block diagram of a data transfer system in accordance with an embodiment.
FIG. 2 is an example block diagram of request hardware and acknowledgment hardware of the sequence control system to perform a data transfer in accordance with one or more embodiments.
FIG. 3 is an example block diagram of control of the hardware in the sequence control system of the data transfer system in accordance with one or more embodiments.
FIG. 4 is a flow chart of functions of the data transfer system in accordance with one or more embodiments.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the scope of the present disclosure.

Embodiments disclosed herein are directed to data transfer based on a direct memory access (DMA) operation where a control path to a request signal output of a first in first out (FIFO) buffer associated with a data transfer is bypassed for example when the FIFO buffer has timing violations such as jitter, timing deviations, timing drift or due to depletion of data in the FIFO buffer such that the data transfer associated with the FIFO buffer is not ready to be performed. The bypass maintains continuity of the data transfer associated with FIFO buffers indicated by subsequent nodes of the linked list and minimizes the impact on defined behaviour of the data transfer system. Well known instructions, protocols, structures, and techniques have not been shown in detail in order not to obfuscate the description.

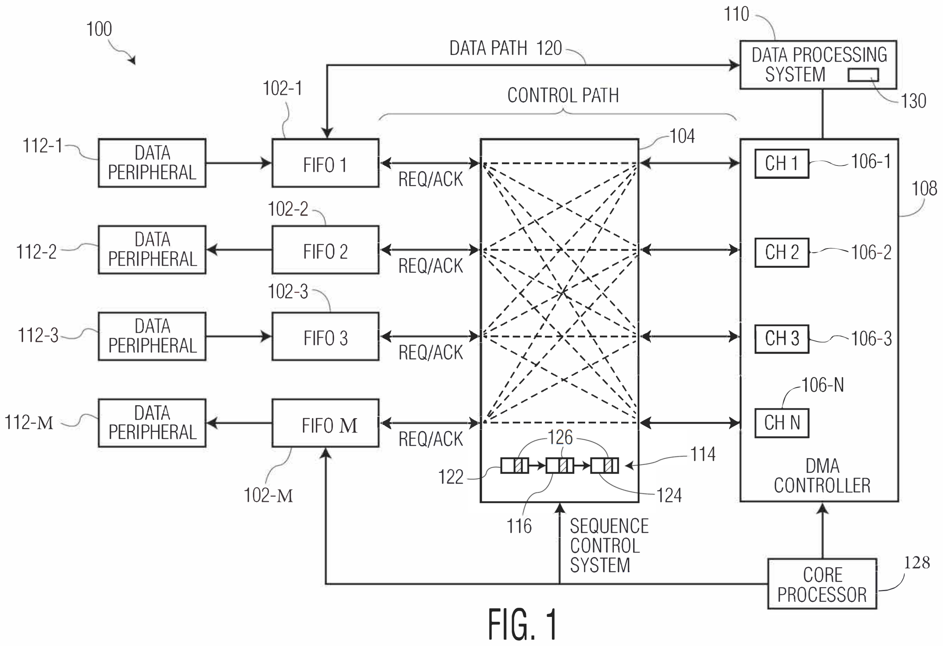

FIG. 1 is an example block diagram of a data transfer system 100 in accordance with one or more embodiments. The data transfer system 100 is arranged with a plurality of components, including but not limited to data peripherals 112-1 to 112-M, first in first out (FIFO) buffers 102-1 to 102-M (where M is an integer) coupled to a respective data peripheral, a sequence control system 104, a direct memory access (DMA) controller 108, a data processing system 110, and a core processor 128. In one or more embodiments, the data peripherals 112-1 to 112-M may each generate data to be transferred to the data processing system 110. The data may be blocks of audio data or video data in the case that the data transfer system 100 is located in an infotainment system of an automobile as an example. The data from the data peripheral 112-1 is stored in a FIFO buffer 102-1 which serves as a data source when providing data to the data processing system 110 over a data path 120 such as a serial or parallel bus and a data sink when receiving data from the data processing system 110 over the data path 120. The data from the data peripheral 112-2 is received from the FIFO buffer 102-2 via the data path 120, the data from data peripheral 112-3 is stored in FIFO buffer 102-3 via the data path 120, etc. In one or more embodiments, a FIFO buffer may be a physical FIFO or a virtual FIFO defined in a physical memory of the data transfer system 100. The sequence control system 104 facilitates exchange of control information between any one of the FIFO buffers 102 and any one of DMA channels 106 of the DMA controller 108 where a DMA channel transfers data between a FIFO buffer and the data processing system 110 in accordance with data transfer parameters defined by nodes of a linked list 114 of the sequence control system 114. The control information may be request signals and acknowledgment signals associated with data transfers as described in further detail below. The sequence control system 104 may define respective control paths shown as the dotted lines between any one the FIFO buffers 102 and any one of the DMA channels 106. The core processor 128 may control operations on one or more of the FIFO buffers 102, sequence control system 104, and DMA controller 108.

The DMA controller 108 facilitates data transfer between the FIFO buffers 102 and data processing system 110 based on a DMA operation where data is transferred without involvement of the core processor 128 after the transfer is initiated. The DMA controller 108 controls a plurality of DMA channels 106 and each DMA channel performs a respective data transfer. Each node in the linked list 114, examples of which are nodes 122, 124, 116 may define a respective data transfer to or from a FIFO where data in the different FIFO buffers 102 identified in the linked list 114 are time aligned and clocked into or out of the FIFO buffers 102 at a same rate. The DMA controller 108 performs the data transfer indicated by the nodes of the linked list 114. The data processing system 110 may be hardware or software for processing the received data such as an audio processor, video processor, or display controller in some examples. The components of the data transfer system 100 may be implemented by one or more of analog circuitry, mix signal circuitry, memory circuitry, logic circuitry, and processing circuitry that executes code stored in a memory to perform disclosed functions on one or more integrated circuits.

The order by which the data of the FIFO buffers 102 are transferred in time is defined by an order of the nodes in the linked list 114. The linked list 114 is illustrated as having three nodes but in other embodiments the linked list 114 may have fewer or more nodes. A first node 122 may indicate a leader FIFO buffer which is a first FIFO buffer for which data is to be transferred by a DMA channel and a last node 124 may indicate a last FIFO buffer for which data is to be transferred by a DMA channel. One or more nodes such as node 116 in between the nodes 122, 124 indicating transfer of the leader FIFO buffer and last FIFO buffer respectively may be a follower FIFO buffer or intermediate FIFO buffer for which data is to be transferred by the DMA channel. In one or more embodiments, DMA channels 106-1 to 106-N (where N is an integer) may perform the data transfer for a respective node starting from a first node 122 in the linked list 114 and ending with a last node 124 in the linked list 114 such that the data transfers of the nodes are performed in a time staggered manner. In some embodiments, the DMA channels 106-1 to 106-N may perform the data transfer for a respective node starting from a first node 122 in the linked list 114 and continuing the data transfer for one or more intermediate nodes of the linked list 114 without a defined last node. In one or more embodiments, the sequence control system 104 may arrange a control path between the FIFO buffer 102-1 and the DMA channel 106-1 to provide an indication from a respective FIFO buffer 102-1 of a node for which a data transfer is to be performed. The core processor 128 may signal the sequence control system 116 to define this control path based on the FIFO buffer indicated by the node. Then, another DMA channel 106-2 may perform a data transfer based on a respective node and FIFO buffer and DMA channel 106-3 may perform yet another data transfer based on yet another respective node and FIFO buffer, etc. in a similar manner.

In one or more embodiments, a FIFO buffer may have one or more associated flags which indicate whether the FIFO buffer is full or empty. The flags serve as a trigger to generate a request to push data to the data processing system 110 when the flag indicates the FIFO buffer is full or pull data from the data processing system 110 to the FIFO buffer when the flag indicates that the FIFO buffer is empty.

In one or more embodiments, the FIFO buffer 102-1 may output a request signal to transfer data at a request signal output of the FIFO buffer 102-1 when the FIFO buffer 102-1 is indicated as full and has data to transfer. The sequence control system 104 may define a control path between the FIFO buffer 102-1 and DMA channel 106-1 shown by a respective dotted line to receive the request signal from the FIFO buffer 102-1 and the DMA channel 106-1 may perform the transfer from the FIFO buffer 102-1 to the data processing system 110 in response to the request signal when the FIFO buffer 102-1 is identified by a node of the linked list 114. The DMA channel 106-1 may then generate an acknowledgement signal that the data transfer is complete which is provided back to the FIFO buffer 102-1 also by the control path at which point the DMA channel 106-1 may execute a data transfer of a FIFO buffer based on a next node in the linked list 114.

In one or more embodiments, the FIFO buffer 102-2 may output a request signal by a request signal output to transfer data when the FIFO buffer 102-2 is indicated as empty and has data to receive rather than when the FIFO buffer 102-2 is full. The sequence control system 104 may define a control path between the request signal output of the FIFO buffer 102-2 and DMA channel 106-2 to receive the request signal from the FIFO buffer 102-2 and the DMA channel 106-2 may perform the transfer from the data processing system 110 to the FIFO buffer 102-2 in response to the request. The DMA channel 106-2 may then generate an acknowledgement signal to the FIFO buffer 102-2 that the data transfer is complete at which point the DMA controller 108 may execute another data transfer of a FIFO buffer indicated by a next node in the linked list 114.

In one or more embodiments, DMA channels 106-3 to 106-N may perform a data transfer based on FIFO buffers 102 indicated in respective nodes in the linked list 114 similar to that of the data transfer associated with FIFO buffer 102-1 or FIFO buffer 102-2. Further, the linked list 114 may have more nodes than nodes 116, 122, 124 to indicate the data transfer associated with the transfer of more than three FIFO buffers 102-1 to 102-3.

In one or more embodiments, a FIFO buffer identified in one node of the linked list 114 might not have data to transfer due to timing violations such as jitter, timing deviations, timing drift, or depletion of data in the FIFO buffer or not be ready to receive data from the DMA channel. Until the data of the FIFO buffer associated with the node is transferred, the data transfers associated with subsequent nodes of the linked list 114 may be blocked even though the data is available to transfer. For example, transfer associated with node 116, 124 may be blocked until transfer associated with node 122 is completed. The timing violation or depletion a FIFO buffer identified by a node of the linked list 114 results in non-responsiveness, malfunction, or inconsistent system behavior of the infotainment system or systems downstream to the infotainment system that rely on the DMA transfers defined by the nodes being performed.

Embodiments disclosed herein are directed to a data transfer indicated by nodes of a linked list 114 where the DMA controller 108 dynamically bypasses a control path to a request signal output of a FIFO buffer identified by a node of the linked list 114. Each node of the linked list 114 has a respective field with a respective bypass indicator 126 as the sequence descriptor. The bypass indicator 126 is enabled or disabled based on status of a FIFO flag of a respective FIFO buffer. For example, the bypass indicator 126 is disabled when the core processor 128 determines that a FIFO buffer indicated by the node is full and has data to transfer (e.g., FIFO full flag is enabled) to the data processing system 110 and the bypass indicator 126 is enabled when the core processor 128 determines that the data in the FIFO buffer is not ready for transfer (e.g., FIFO full flag is disabled). The flag may be disabled because the buffer not full yet, the data in the FIFO buffer has already been transferred, or is stale. As another example, the bypass indicator 126 is disabled when the core processor 128 determines that a FIFO buffer indicated by the node is not empty and not ready to receive data from the DMA channel (e.g., FIFO empty flag is disabled) and enabled when the core processor 128 determines that the FIFO buffer is empty and ready to receive data (e.g., FIFO empty flag is enabled). The control path between the FIFO buffer and DMA channel is bypassed and instead the request signal to transfer data is originated by the sequence control system 104 to prevent stalling of the data transfer of subsequent nodes in the linked list 114 rather than the request being provided by the FIFO buffer. The DMA channel then performs the data transfer transferring the data from the FIFO buffer or to the FIFO buffer. In one or more embodiments, the DMA controller 108 may notify an application running 130 in the data processing system 110 that the data transferred to/from the FIFO buffer was requested by the sequence control system 104 rather than by the FIFO buffer. The application 130 which is software that may process the data may need to know this information because the data in the FIFO buffer which is transferred may be stale, already transferred, corrupted, or invalid and processing by the data processing system 110 may need to be modified. Alternatively, the data stored to the FIFO buffer might be unreliable because the FIFO buffer was not ready to receive the data. Continuity of DMA data transfer of time aligned data of correctly functioning FIFO buffers is maintained and the impact on behaviour of the application 130 is minimized rather than waiting for the request to transfer data of the FIFO buffer being received and data transfer for each FIFO buffer is performed in a timely manner.

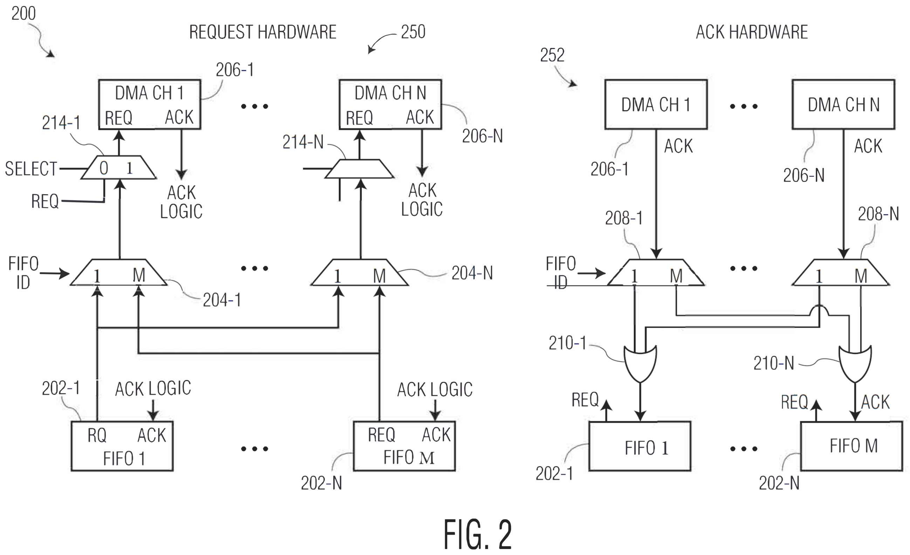

FIG. 2 is an example block diagram 200 of request hardware 250 and acknowledgment hardware 252 of the sequence control system 104 to perform a data transfer in accordance with one or more embodiments. A number M of FIFO buffers 202, multiplexers 204, selectors 214 and DMA channels 206 are illustrated. In one or more embodiments, a request output of FIFO buffer 202-1 is coupled to an input of multiplexer 204-1, an output of the multiplexer 204-1 is coupled to an input of the selector 214-1, and an output of the selector 214-1 is coupled to a request input of the DMA channel 206-1 in the request hardware 250. Remaining FIFO buffers 206, multiplexers 204, selectors 214 and DMA channels 206 of the request hardware are connected in a similar manner. An integer number M of FIFO buffers 202, OR gates 210, demultiplexers 208, and DMA channels 206 are illustrated in the acknowledgment hardware 252. In one or more embodiments, an acknowledgment output of the DMA channel 206-1 is coupled to an input of the demultiplexer 208-1, an output of the demultiplexer 208-1 is coupled to an input of the OR gate 210-1, and an output of the OR gate 210-1 is coupled to an acknowledgment input of the FIFO buffer 202-1. Similar connections are made for the other FIFO buffers 202 to the DMA channel 206-1. Further, remaining DMA channels 206 are connected to FIFO buffers 202, OR gates 210, multiplexers 208, and DMA channels 206 of the acknowledgment hardware 252 in a similar manner.

In one or more embodiments, the FIFO buffer 202-1 is emptied or filled by a DMA operation. The data transfer begins by identifying for a node in the linked list 114 a FIFO buffer 202-1 associated with a data transfer indicated by the node. The multiplexer 204-1 associated with the FIFO buffer 202-1 is provided with an indication of this FIFO buffer 202-1 (FIFO ID) which causes the multiplexer 204-1 define a control path of the request output of the FIFO buffer 202-1 to the selector 214-1. The selector 214-1 may have two inputs one of which is configured to be coupled to the control path established to the FIFO buffer 202-1. The selector 214-1 may be configured by the sequence control system 104 to define a control path to the DMA channel 206-1 so than any request signal received from the FIFO buffer 202-1 is provided to the DMA channel 206-1. A control path between the FIFO and DMA channel is an example of the control path illustrated in the sequence control system 104 by the dotted line.

The DMA operation for one channel is performed in accordance with the linked list 114. The data to or from the FIFO buffer 202-1 is transferred via the data path 120. In one or more embodiments, the FIFO buffer 202-1 will be provided with the acknowledgment of the data transfer by the DMA channel 206-1. Acknowledgement hardware of the sequence control system 104 has demultiplexers 208 and OR gates 210 to provide this acknowledgment from the DMA channels 206 to the FIFO buffers 202. The demultiplexer 208-1 may be provided with an indication of the FIFO buffer 206-1 to where the acknowledgment signal from the DMA channel 202-1 coupled to the demultiplexer 208-1 is to be provided. The demultiplexer 208-1 then provides the acknowledgment signal to the indicated FIFO buffer 206-1 via the OR gate 210-1 to conclude the data transfer for the FIFO buffer 202-1.

In one or more embodiments, the process of configuring the multiplexer 204-1 and selector 214-1 to define a control path between the DMA channel 202-1 and the FIFO buffer 202-1 to perform a data transfer of the FIFO buffer 202-1 as indicated by a node, providing a request to transfer data of the FIFO buffer 202-1 and configuring the demultiplexer 208-1 to receive by the FIFO buffer 202-1 the acknowledgement of the request from the DMA channel 208-1 is repeated for the data transfer associated with each FIFO buffer indicated in the nodes of the linked list 114 and each DMA channel 206. This process is repeated until a data transfer of a last FIFO buffer is performed as indicated by a last node in the linked list 114.

A FIFO buffer such as FIFO buffer 202-1 associated with a node of the linked list 114 may output a request signal to transfer data. But in some embodiments, the FIFO buffer 202-1 may not have data to transfer to the data processing system 110 (e.g., FIFO full flag is disabled). For example, the FIFO buffer 202-1 may not have data to transfer because of timing violations of the FIFO buffer 201-1 such as jitter, timing deviations, timing drift, or a depletion of the FIFO buffer 202-1. The FIFO buffer 202-1 does not issue a request signal to transfer data resulting in data transfer of subsequent nodes of the linked list 114 being delayed until the timing violation or depletion is remedied. To avoid the data transfer system 100 waiting for the FIFO buffer 202-1 to be able to transfer data, maintain a continuity of the DMA data transfer of time aligned data, and reduce an impact on behaviour of the application 130, the selector 214-1 may be configured to bypass the control path from the request signal output of the FIFO buffer 206-1 to the DMA channel 206-1 and output an alternative request signal not originating from the FIFO buffer 206-1 when the FIFO buffer 202-1 is not able to issue the request signal. The alternative request signal is issued rather than waiting for the FIFO buffer 206-1 to output the request signal. This alternative request signal (REQ) is provided as an input to the selector 214-1 and selected for output by the selector 214-1. The data transferred from the FIFO buffer 206-1 may be be stale, already transferred, or invalid data in the FIFO buffer 206-1 transferred via the data path 120. This way the data transfer system 100 does not need to wait for the FIFO buffer 206-1 to issue the request signal and continuity of the DMA transfer indicated by the nodes of the linked list 114 is maintained. The DMA channel 208-1 may then perform the data transfer.

In some embodiments, the FIFO buffer 202-2 may not be ready to receive data to be transferred by the DMA channel 206-2 (e.g., FIFO empty flag is disabled). To avoid the data transfer system 100 waiting for the FIFO buffer 202-1 to be ready to receive data, maintain a continuity of the DMA data transfer of time aligned data, and reduce an impact on behaviour of the application 130, the selector 214-2 may be configured to bypass the control path from the request signal output of the FIFO buffer 206-2 to the DMA channel 206-2 and output an alternative request signal not from the FIFO buffer 206-1 when the FIFO buffer 202-2 is not able to issue the request signal. This alternative request signal (REQ) is provided as an input to the selector 214-2 and selected for output by the selector 214-2. The data transferred to the FIFO buffer 206-1 via the data path 120 might overwrite valid data in the FIFO buffer 206-1. This way the data transfer system 100 does not need to wait for the FIFO buffer 206-2 to issue the request signal and continuity of the DMA transfer indicated by the nodes of the linked list 114 is maintained.

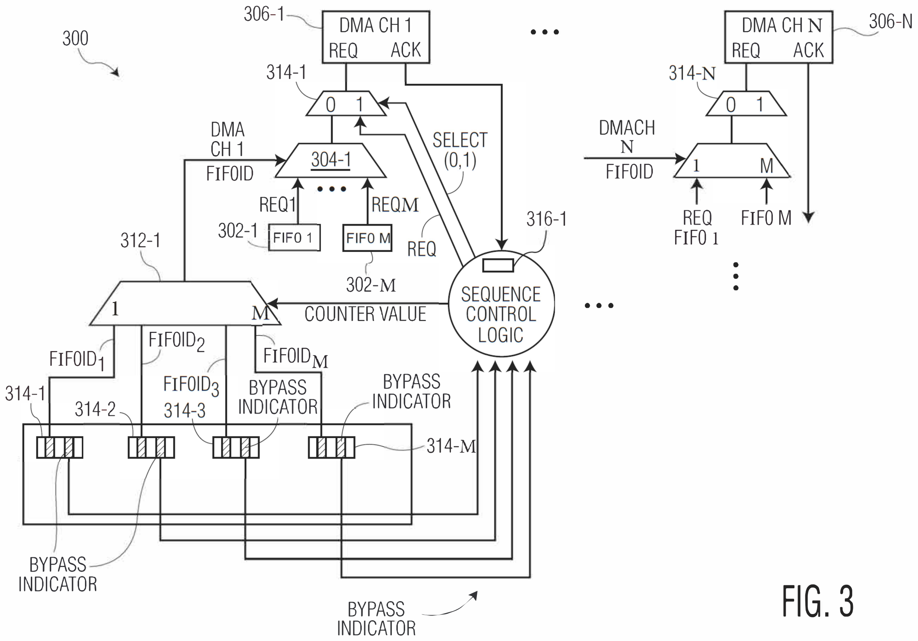

FIG. 3 is an example block diagram 300 of control of the hardware in the sequence control system 104 in accordance with one or more embodiments. The control may be based on indications in respective registers 314-1 to 314-M implementing the nodes of the linked list 114. A register may store a FIFO identification (ID) and a sequence descriptor. Each FIFO ID is a FIFO identifier of a FIFO buffer for which the data transfer is performed and the registers 314 are ordered in accordance with the order of data transfer. For example, a data transfer of FIFO buffer with FIFO ID₁ is performed, followed by a data transfer of FIFO buffer with FIFO ID₂, etc. Each FIFO ID in each register may be provided as an input to the multiplexer 312. For example, multiplexer input 1 of the multiplexer 312-1 receives the FIFO ID of a first FIFO buffer for which a data transfer is to be performed, multiplexer input 2 of the multiplexer 312-1 receives the FIFO ID of a second FIFO buffer for which a data transfer is to be performed, etc. in accordance with an order of the sequence of nodes in the linked list 114. Further, causing the multiplexer 312-1 to output each of the FIFO IDs starting from input 1 and ending at input M will cause the multiplexer 312-1 to output the FIFO IDs in an order corresponding to the order of data transfer of the FIFO buffers indicated by the linked list 114.

In one or more embodiments, the sequence control system 104 may have a counter 316-1 in sequence control logic of the sequence control system 108. The counter 316-1 may have a value which indicates for which node of the linked list 114 the data transfer is to be performed. The counter value of the counter 316-1 is a pointer to the node of the linked list 114 for which a data transfer is to be performed. The counter 316-1 may generate a sequentially increasing value corresponding to a data transfer of a corresponding node in the linked list 114. For example, counter value 1 may correspond to a data transfer of a leader node, counter value 2 may correspond to data transfer of a subsequent node, and counter M may correspond to data transfer of a last node. Sequence control logic may cause the multiplexer 312-1 to receive this counter value which causes the multiplexer 312-1 to output the FIFO ID of the FIFO buffer indicated by the node of the linked list 114 for which a data transfer is to be performed. Based on the arrangement of FIFO IDs provided to the multiplexer inputs, a counter value of 1 may cause the multiplexer 312-1 to output the FIFO ID of multiplexer input 1 corresponding to the leader node, a counter value of 2 may cause the multiplexer 312-1 to output the FIFO ID of multiplexer input 2 corresponding to a subsequent node, and a counter value of M may cause the multiplexer 312-1 to output the FIFO ID of multiplexer input M corresponding to last node, etc.

In one or more embodiments, multiplexer 304-1 may receive the FIFO ID output by the multiplexer 312-1. Inputs of the multiplexer 304-1 may be coupled to a request output of a respective FIFO buffer. For example, multiplexer input 1 of the multiplexer 304-1 may be coupled to FIFO buffer 202-1, multiplexer input 2 of the multiplexer 304-1 may be coupled to FIFO buffer 202-1, etc. Based on the FIFO ID output by the multiplexer 312-1, the multiplexer 304-1 may define a control path between a request signal output of the corresponding FIFO buffer indicated by the FIFO ID to the output of the multiplexer 304-1. For example, if the FIFO ID is for FIFO buffer 202-1, then a control path between a request signal output of the FIFO buffer 202-1 to the output of the multiplexer 304-1 is defined, if the FIFO ID is for FIFO buffer 2, then a control path between a request signal output of the FIFO buffer 202-2 to the output of the multiplexer 304-1 is defined. Then, when the FIFO buffer outputs the request signal for a data transfer the request signal is provided to an input of the selector 314-1.

In one or more embodiments, each node of the linked list 114 has a bypass indicator in the sequence descriptor field of a respective register. The bypass indicator may indicate whether the control path from the FIFO buffer to the output of the multiplexer 312-1 should be extended to the DMA channel so that the request signal from a FIFO buffer can be provided to the DMA channel 302-1 or not extended (i.e., bypassed). In one or more embodiments, the bypass indicator may be active if a FIFO full flag indicates that the FIFO buffer 302-1 is not full and disabled if the FIFO full flag indicates that the FIFO buffer 302-1 is full for a data transfer from the FIFO buffer 302-1 to the data processing system 110. In one or more embodiments, the bypass indicator may be active if a FIFO empty flag does not indicate that the FIFO buffer 302-1 is empty and disabled if the FIFO empty flag indicates that the FIFO buffer 302-1 is empty for a data transfer from the data processing system 110 to the FIFO buffer 302-1 The core processor 128 may be responsible for appropriately setting the bypass indicator in one or more embodiments based on the FIFO flag.

If the bypass indicator is not active, then the data transfer for the FIFO buffer 302-1 is performed. A signal is provided to the selector 314-1 which causes the selector 314-1 to further extend the control path from the output of a request output of the FIFO buffer 302-1 to the output of the multiplexer 304-1 to the DMA channel 306-1 such that a request signal from the FIFO buffer 302-1 may be transmitted over the control path to the DMA channel 306-1 to perform the data transfer. Further, the core processor 128 may indicate to the DMA channel 306-1, the FIFO buffer for which the request signal is received so that the DMA channel 306-1 knows the FIFO buffer for which the data transfer is to be performed. The data transfer may be to or from the FIFO buffer. When the data transfer is completed, the DMA channel 306-1 provides an acknowledgment signal back to the FIFO buffer 302-1 over a control path between the FIFO buffer 306-1 and DMA channel 306-1. Then the sequence logic may update the counter 308-1 to perform a data transfer of a next node. In one or more embodiments, the multiplexer 304-1 and selector 314-1 may be then arranged to output a request signal from the FIFO buffer 306-2 based on updating the counter value of the counter 316-1 to perform the data transfer and this process repeated so long as a node does not have a respective bypass indicator which is active.

In some embodiments, a data peripheral 112 which provides data to a FIFO buffer such as one of FIFO buffer 206-1 to 206-M could have timing deviations, drift, or data may be depleted. Data might not be available to transfer by the DMA channel 202-1 blocking data transfers of subsequent nodes even though the subsequent nodes have associated data to transfer resulting in non-responsiveness, malfunction, or inconsistent system behavior of the infotainment system or the FIFO buffer may not be ready to receive data from the DMA channel. In the infotainment system, audio or video playback might stop or the system may become unresponsive. In this case, the bypass indicator in a register is active. If the bypass indicator is active, then the selector 314-1 is arranged to output a request signal originating from the sequence control logic to the DMA channel 306-1 by a path from the sequence control logic to the DMA channel 306-1 which is different from the control path to cause the DMA channel 306-1 to perform a data transfer of FIFO buffer 202-1 rather than waiting for FIFO buffer 202-1 to originate this request signal. When the data transfer is completed, the DMA channel 306-1 provides an acknowledgment signal back to the sequence logic control. The sequence logic control may cause the counter value to be incremented based on the acknowledgment signal received from the DMA channel 202 which indicates a data transfer of a FIFO buffer 302-1 indicated by a node in the linked list 114 is completed. Continuity of DMA data transfer of correctly functioning nodes is maintained and the impact on defined behaviour of system application, due to malfunctioning peripherals, is minimized. If a FIFO buffer 206-1 is not ready for a data transfer, the data transfer system 100 is not held up waiting for the FIFO buffer 206-1 to output the request signal.

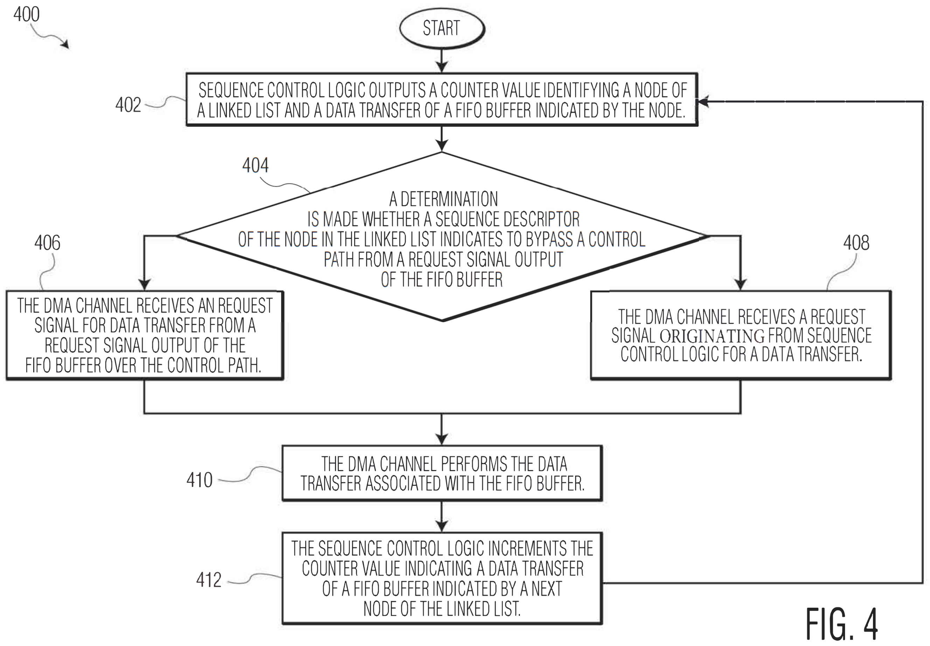

FIG. 4 is a flow chart 400 of functions of the data transfer system 100 in accordance with one or more embodiments. The functions may be performed by the data transfer system 100 in one or more embodiments.

At 402, sequence control logic outputs a counter value identifying a node of a linked list and a data transfer of a FIFO buffer indicated by the node. The data transfer may be between a FIFO buffer of a plurality of FIFO buffers and a data processing system via a data path. At 404, a determination is made whether a sequence descriptor of the node in the linked list indicates to bypass a control path to a request signal output of the FIFO buffer. The control path may be bypassed if the FIFO buffer has timing deviations, drift, or data is depleted or is not ready to receive data from the DMA channel. If the control path is not bypassed, then at 406, the DMA channel receives a request signal for data transfer originating from a request signal output of the FIFO buffer over the control path. If the control path from the request signal output of the FIFO buffer to the DMA channel is bypassed, then at 408, then the DMA channel receives a request signal originating from sequence control logic for the data transfer. In some embodiments, the core processor may also provide an indication to the data processing system that the control path was bypassed. At 410, the DMA channel performs the data transfer associated with the FIFO buffer. When the data transfer is completed, the DMA channel may output an acknowledgment signal which is provided to the FIFO buffer and sequence control logic to indicate to the FIFO buffer that the data transfer is complete. At 412, the sequence control logic increments the counter value indicating a data transfer of a FIFO buffer indicated by a next node of the linked list. Processing then returns to step 402.

In one or more embodiments, a method is disclosed. The method includes: outputting a counter value which identifies a node of a linked list corresponding to a first-in-first out (FIFO) buffer; determining whether the node in the linked list indicates to bypass a control path from a request signal output of the FIFO buffer; outputting a request signal originating from sequence control logic of a sequence control system based on the determination that the control path is bypassed; outputting a request signal originating from the FIFO buffer over the control path based on the determination that the control path is not bypassed; and performing, by a direct memory access (DMA) channel, a data transfer of the FIFO buffer based on detecting the request signal. In one or more embodiments, the method further includes incrementing the counter value to indicate a data transfer of a FIFO buffer indicated by a next node in the linked list. In one or more embodiments, the method further includes providing an acknowledgement to the completed data transfer to the sequence control system and the FIFO buffer. In one or more embodiments, performing the data transfer of the FIFO buffer includes transferring data in the FIFO buffer to a data processing system via a data path. In one or more embodiments, the data path is a serial bus. In one or more embodiments, the indication to bypass the control path is disabled based on a FIFO full flag indicating that the FIFO buffer is full when the data transfer is to the data processing system. In one or more embodiments, the indication to bypass the control path is enabled based on a FIFO empty flag indicating that the FIFO buffer not empty when the data transfer is to the FIFO buffer. In one or more embodiments, the method further includes providing an indication that the control path is bypassed to an application of a data processing system which receives the data.

In one or more embodiments, data transfer system is disclosed. The data transfer system includes: one or more FIFO buffers; a first multiplexer; a second multiplexer; a sequence control system; a selector; and a direct memory access (DMA) channel; wherein the first multiplexer is arranged with a plurality of inputs for receiving a respective indication of a FIFO ID stored in a node of a linked list and an output for outputting the FIFO ID to the second multiplexer; wherein the second multiplexer is arranged with a plurality of inputs each coupled to a request signal output of a respective FIFO buffer and based on the FIFO ID output by the first multiplexer defining a control path from the FIFO buffer indicated by the FIFO ID to an input of the second multiplexer; wherein the selector is arranged to one of extend the control path from an output of the second multiplexer to the DMA channel and define another path originating from sequence control logic of the sequence control system to the DMA channel based on an indication from the sequence control logic; and wherein a data transfer of the FIFO buffer is performed based on a request signal being received by the DMA channel from the FIFO buffer over the control path or from the other path. In one or more embodiments, the data transfer system further includes a counter which has a counter value to indicate a data transfer of a FIFO buffer of the one or more FIFO buffers. In an example, the data transfer system further includes the DMA channel being arranged to provide an acknowledgement signal of the completed data transfer to the sequence control system and the FIFO buffer. In one or more embodiments, a data transfer system includes a data processing system with application which receives an indication that the other path is defined. In an example, the data transfer system further includes a data path arranged to transfer data in the FIFO buffer to a data processing system. In one or more embodiments, the data path is a serial bus. In one or more embodiments, the control path is extended based on a FIFO full flag indicating that the FIFO buffer is full when the data transfer is to the data processing system and the other path is defined based on the FIFO full flag indicating that the FIFO buffer is not full when the data transfer is to the data processing system. In one or more embodiments, the data transfer system further includes an application of the data processing system arranged to receive an indication that the other path is defined in the data transfer system and not the control path. In one or more embodiments, the control path is extended based on a FIFO empty flag indicating that the FIFO buffer is empty when the data transfer is to the FIFO buffer and the other path is defined based on the FIFO empty flag indicating that the FIFO buffer is not empty when the data transfer is to the FIFO buffer.

In one or more embodiments, a sequence control system of a data transfer system is disclosed. The system is arranged to output a counter value indicating a node of a linked list identifying a first-in-first out (FIFO) buffer; determine whether the node in the linked list indicates to bypass a control path from a request signal output of the FIFO buffer to a direct memory access (DMA) channel; output a request signal originating from sequence control logic of the sequence control system based on the determination that the control path is bypassed; output a request signal from the request output of the FIFO buffer based on the determination that the control path is not bypassed; and cause to perform by the DMA channel the data transfer of the FIFO buffer based on the output of the request signal. In one or more embodiments, the indication to bypass the control path is enabled based on a FIFO full flag indicating that the FIFO buffer is not full when the data transfer is to the data processing system. In one or more embodiments, the sequence control system is further arranged to provide an acknowledgement to the completed data transfer to the sequence control logic and the FIFO buffer.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this
should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A method comprising:
outputting a counter value which identifies a node of a linked list corresponding to a first-in-first out (FIFO) buffer;
determining whether the node in the linked list indicates to bypass a control path from a request signal output of the FIFO buffer;
outputting a request signal originating from sequence control logic of a sequence control system based on the determination that the control path is bypassed;
outputting a request signal originating from the FIFO buffer over the control path based on the determination that the control path is not bypassed; and
performing, by a direct memory access (DMA) channel, a data transfer of the FIFO buffer based on detecting the request signal.

2. The method of claim 1, further comprising incrementing the counter value to indicate a data transfer of a FIFO buffer indicated by a next node in the linked list.

3. The method of claim 1 or 2, further comprising providing an acknowledgement to the completed data transfer to the sequence control system and the FIFO buffer.

4. The method of any of claims 1 to 3, wherein performing the data transfer of the FIFO buffer comprises transferring data in the FIFO buffer to a data processing system via a data path.

5. The method of claim 4, wherein the data path is a serial bus.

6. The method of any of claims 1 to 5, wherein the indication to bypass the control path is disabled based on a FIFO full flag indicating that the FIFO buffer is full when the data transfer is to the data processing system.

7. The method of any of claims 1 to 6, wherein the indication to bypass the control path is enabled based on a FIFO empty flag indicating that the FIFO buffer not empty when the data transfer is to the FIFO buffer.

8. The method of any of claims 1 to 7, further comprising providing an indication that the control path is bypassed to an application of a data processing system which receives the data.

9. A data transfer system comprising:
one or more FIFO buffers;
a first multiplexer;
a second multiplexer;
a sequence control system;
a selector; and
a direct memory access (DMA) channel;
wherein the first multiplexer is arranged with a plurality of inputs for receiving a respective indication of a FIFO ID stored in a node of a linked list and an output for outputting the FIFO ID to the second multiplexer;
wherein the second multiplexer is arranged with a plurality of inputs each coupled to a request signal output of a respective FIFO buffer and based on the FIFO ID output by the first multiplexer defining a control path from the FIFO buffer indicated by the FIFO ID to an input of the second multiplexer;
wherein the selector is arranged to one of extend the control path from an output of the second multiplexer to the DMA channel define another path originating from sequence control logic of the sequence control system to the DMA channel based on an indication from the sequence control logic; and
wherein a data transfer of the FIFO buffer is performed based on a request signal being received by the DMA channel from the FIFO buffer over the control path or from the other path.

10. The data transfer system of claim 9, further comprising a counter which has a counter value to indicate a data transfer of a FIFO buffer of the one or more FIFO buffers.

11. The data transfer system of claim 9 or 10, further comprising the DMA channel being arranged to provide an acknowledgement signal of the completed data transfer to the sequence control system and the FIFO buffer.

12. The data transfer system of any of claims 9 to 11, further comprising a data processing system having an application which receives an indication that the other path is defined.

13. The data transfer system of any of claims 9 to 12, further comprising a data path arranged to transfer data in the FIFO buffer to a data processing system.

14. The data transfer system of claim 13, wherein the data path is a serial bus.

15. A sequence control system of a data transfer system arranged to output a counter value indicating a node of a linked list identifying a first-in-first out (FIFO) buffer; determine whether the node in the linked list indicates to bypass a control path from a request signal output of the FIFO buffer to a direct memory access (DMA) channel; output a request signal originating from sequence control logic of the sequence control system based on the determination that the control path is bypassed; output a request signal from the request output of the FIFO buffer based on the determination that the control path is not bypassed; and cause to perform by the DMA channel the data transfer of the FIFO buffer based on the output of the request signal.
